# EUROPEAN PATENT SPECIFICATION

(11) **EP 2 554 444 B1**
(45) Date of publication and mention of the grant of the patent: **19.08.2015**
(21) Application number: 12177694.2
(22) Date of filing: 24.07.2012
(51) Int. Cl.: B60T 8/17, B60T 8/26, B62L 3/08

(54) **Brake system**
Bremssystem
Système de frein

(30) Priority: 31.07.2011 JP 2011167899
(43) Date of publication of application: 06.02.2013
(73) Proprietor: Honda Motor Co., Ltd., Minato-ku Tokyo 107-8556 (JP)
(72) Inventor: Toda, Makoto, SAITAMA, Saitama 351-0193 (JP); Tani, Kazuhiko, SAITAMA, Saitama 351-0193 (JP)
(74) Representative: Quinterno, Giuseppe

(56) References cited:
- EP-A1- 1 674 362
- EP-A1- 2 311 701
- EP-A2- 1 277 635
- WO-A1-2007/128670
- US-A1- 2006 170 280

## Description

The present invention relates to brake system of a vehicle, and more particularly to a brake system of the kind defined in the preamble of claim 1.

EP 1 674 362 A1 discloses such a brake system used in a motorcycle, which adopts a combined brake system which controls front and rear wheel brakes in an interlocking manner and an ABS, wherein the brake system is a hydraulic system in which a braking inputting side where a liquid pressure is generated when a rider (driver) operates a brake operating element and a braking output side where the liquid pressure is applied to a wheel braking means can be communicated with each other or interrupted from each other by an electromagnetic open/close valve. As one example of such a brake system, there has been known a brake-by-wire (BBW) type brake system where a manipulated variable of the brake operating element is electrically detected, and an actuator is controlled based on the detection value so that a liquid pressure is generated thus imparting a braking force to a wheel braking means.

According to the above-mentioned document, , in performing a control where a braking pressure of the wheel braking means on the front wheel side is gradually increased, and a braking pressure of the wheel braking means on the rear wheel side is gradually increased along with such increase of the braking pressure of the wheel braking means on the front wheel side and, thereafter, is decreased, when an ABS is operated with respect to the wheel braking means on the front wheel side, a fixed braking pressure is left in the wheel braking means on a rear wheel side thus improving braking feeling.

In a brake system of a motorcycle, front-and-rear-wheel-use brake operating elements (for example, a brake lever and a brake pedal) are separately provided and hence, even when a combined brake system is adopted, by making a braking means on an operating element's side which a rider operates mainly perform braking, it is possible to impart a braking force to the wheel which conforms to an intention of the rider.

However, in the case where the rider operates only a brake lever so that braking is mainly applied to a front wheel brake side, when an ABS is operated with respect to a front wheel brake, the deceleration of a vehicle is lowered. Accordingly, there has been a demand for imparting a braking force to respective braking means such that proper deceleration can be acquired over the whole vehicle even in such a case.

Accordingly, it is an object of the present invention to satisfy such a demand.

That demand is satisfied and the above-mentioned drawbacks are overcome according to the present invention by a brake system having the features defined in claim 1.

The invention as defined in claim 2 is, in a brake system according to claim 1, characterized in that
when the ABS is operated with respect to the front wheel brake,
the controller (20) sets a rear wheel target pressure (Prr1) in response to inputting by the front wheel brake operating element (12), and
the controller (20) drives the actuator (22) toward the rear wheel target pressure (Prr1).

The invention as defined in claim 4 is, in a brake system according to claim 2, characterized in that
when the ABS is operated with respect to the front wheel brake,
the controller (20) sets a rear wheel limit target pressure (Prmax) using a braking pressure or a slip ratio of the front wheel brake based on the ideal distribution of the braking forces of the front and rear wheels,
the controller (20) compares the rear wheel target pressure (Prr1) and the rear wheel limit target pressure (Prmax),
the controller (20) drives the actuator toward the rear wheel target pressure (Prr1) when the rear wheel target pressure (Prr1) is lower than the rear wheel limit target pressure (Prmax), and
the controller (20) drives the actuator toward the rear wheel limit target pressure (Prmax) when the rear wheel target pressure (Prr1) is higher than the rear wheel limit target pressure (Prmax).

According to the invention as defined in claim 1, the controller sets the braking force distributed to the rear wheel brake when the front wheel brake operating element is operated to a low value with respect to the ideal distribution of the braking forces to the front and rear wheels. Accordingly, when the front wheel brake operating element is operated, braking mainly performed by the front wheel brake is performed and hence, even in a front-and-rear-wheel combined braking state, the deceleration feeling close to the intention of a rider can be obtained. Further, when the ABS is operated with respect to the front wheel brake, the actuator is driven in the direction that a braking pressure of the rear wheel braking means is increased and hence, due to the increase of the braking force on a rear wheel side, a ground load allotted amount on a rear wheel side can be increased thus enhancing the deceleration of a vehicle body.

Further, by increasing the braking pressure of the rear wheel brake, a braking pressure point at which the ABS of the front wheel brake is operated is shifted in the elevating direction and hence, a braking force of the front wheel brake can be increased thus obtaining the higher deceleration.

Furthermore, the braking force of the rear wheel brake at the time of operating the ABS of the front wheel brake is controlled so as to be increased toward the rear wheel limit target pressure corresponding to the braking force at which the rear wheel is locked and hence, a relatively large braking force is imparted to the rear wheel braking means at the time of performing the ABS operation thus enhancing the deceleration of the vehicle as a whole.

According to the invention as defined in Claim 2 , in the braking force control of the rear wheel brake at the time of operating the ABS of the front wheel brake, the braking pressure of the rear wheel brake is set corresponding to inputting by the operating element for the front wheel brake and hence, the vehicle can obtain the deceleration close to operation feeling of a rider as a whole.

According to the invention as defined in Claim 3 , in the braking force control of the rear wheel brake at the time of operating the ABS of the front wheel brake, the rear wheel limit target pressure and the rear wheel target pressure are compared to each other and when the target pressure is changed and the relationship of the rear wheel limit target pressure being larger than the rear wheel target pressure where the lowering of total braking force is relatively small is established, the braking force is controlled toward the rear wheel target so that the large deceleration can be obtained and the braking which conforms to the intention of a rider can be realized. On the other hand, when the rear wheel limit target pressure is equal to or smaller than the rear wheel target pressure such as sudden braking, the braking force of the rear wheel brake is controlled toward the rear wheel limit target pressure which is a limit at which the rear wheel brake is locked and hence, the higher deceleration can be obtained.

Further features and advantages of the invention will become apparent from the following description, provided purely by way of a non-limiting example, with reference to the annexed drawings, wherein:
Fig. 1 is a hydraulic circuit diagram of a motorcycle-use brake device according to an embodiment;
Fig. 2 is a graph showing an ideal distribution curve of front and rear brakes and a braking curve of the rear wheel brake;
Fig. 3 is a flowchart according to the first embodiment;
Fig. 4 is a graph showing a change in braking force at the time of a front-wheel non ABS control;
Fig. 5 is a graph showing a change in braking force of the front wheel brake at the time of a front-wheel ABS control.
Fig. 6 is a graph showing a braking force control of the rear wheel brake in the first embodiment;
Fig. 7 is a flowchart according to the second embodiment; and
Fig. 8 is a graph showing a braking force control of a rear wheel brake in the second embodiment.

Hereinafter, a brake device of a motorcycle according to an embodiment of the present invention is explained in conjunction with drawings.

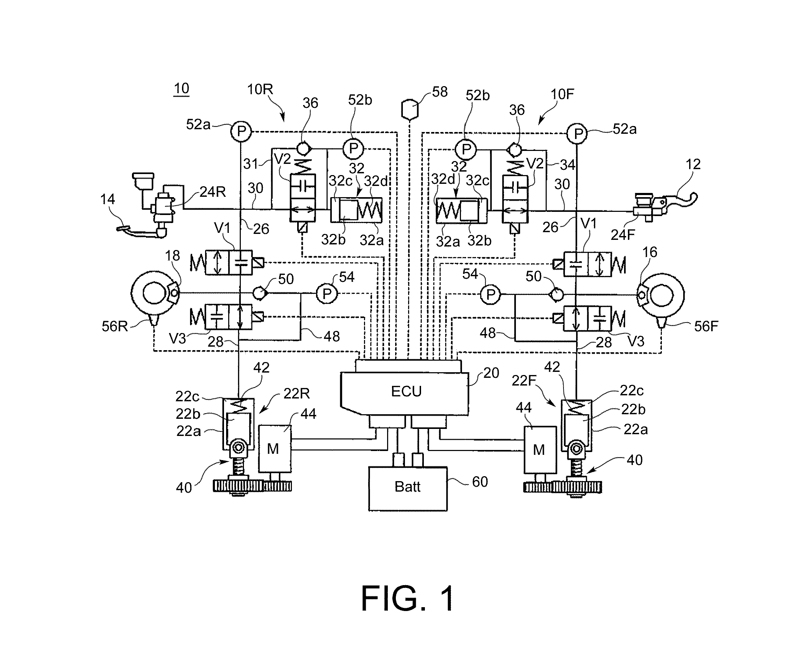

Fig. 1 is a circuit diagram showing the constitution of the brake device 10 of a motorcycle according to this embodiment. The brake device 10 is a device which can impart a predetermined braking force to a vehicle by performing a drive control of a front-wheel-side brake caliper (front wheel brake) 16 and a rear-wheel-side brake caliper (rear wheel brake) 18 using a brake-by-wire in response to an operation of a brake lever 12 and a brake pedal 14 by a rider (driver).

As shown in Fig. 1, the brake device 10 is configured such that a front wheel side brake circuit 10F and a rear-wheel-side brake circuit 10R which are independent from each other are interlocked with each other by a controller (ECU, control part) 20.

The brake device 10 adopts a brake-by-wire-method in the front-wheel-side brake circuit 10F and the rear-wheel-side brake circuit 10R. That is, in the brake device 10, a manipulated variable (a liquid pressure in this embodiment) of the brake lever 12 or the brake pedal 14 which constitutes a brake operating element is electrically detected, and based on a liquid pressure which is generated by a front-wheel-side hydraulic modulator 22F or a rear-wheel-side hydraulic modulator 22R (corresponding to an actuator of the present invention) based on the detection value, a predetermined braking force can be generated by the front-wheel-side brake caliper 16 or the rear-wheel-side brake caliper 18 which constitutes a braking part.

During parking or in an extremely low speed region, a valve (front-wheel-side V1) described later is opened and hence, a braking force is imparted to the front-wheel-side brake caliper 16 by a liquid pressure generated by a front-wheel-side master cylinder 24F pushed by the lever 12 without using the front wheel side hydraulic modulator 22F.

Further, the brake device 10 adopts a combined brake system where when one of front-wheel-side and rear-wheel-side brake operating elements, for example, the brake pedal 14 which constitutes the rear-wheel-side brake operating element is operated, the front wheel side brake caliper 16 and the rear-wheel-side brake caliper 18 which constitute front-wheel-side and rear-wheel-side control parts are drivably controlled in an interlocking manner under a control by the controller 20.

For example, when the brake pedal 14 is operated, in the rear wheel side brake circuit 10R, under the control by the controller 20, based on a liquid pressure in the rear wheel side master cylinder 24R, the rear wheel side hydraulic modulator 22R is drivably controlled by a brake-by wire method so that a predetermined liquid pressure is applied to the rear wheel side brake caliper 18, and the front wheel side hydraulic modulator 22F of the front wheel side brake circuit 10F is also drivably controlled in an interlocking manner so that a predetermined liquid pressure is also applied to the front wheel side brake caliper 16.

With respect to a brake operation in the brake device 10, the brake operation is performed by the brake lever 12 which constitutes a front-wheel-side brake operating element in the front-wheel-side brake circuit 10F, and the brake operation is performed by the brake pedal 14 which constitutes the rear-wheel-side brake operating element in the rear-wheel-side brake circuit 10R. However, the front-wheel-side brake circuit 10F and the rear-wheel-side brake circuit 10R are substantially equal with respect to other constitutions. Accordingly, the explanation relating to the constitution of the brake circuit made hereinafter is made basically with respect to the front-wheel-side brake circuit 10F, and the repeated explanation is omitted with respect to the rear-wheel-side brake circuit 10R by giving the same reference symbols to constitutional elements identical to or similar to the corresponding constitutional elements of the front-wheel-side brake circuit 10F.

In the front-wheel-side brake circuit 10F, the front-wheel-side master cylinder 24F which is operated in an interlocking manner with the brake lever 12 which constitutes a brake operating element and a front-wheel-side brake caliper 16 which corresponds to the front-wheel-side master cylinder 24F are connected with each other through a main passage 26. The front-wheel-side hydraulic modulator 22F is merged and connected to a middle portion of the main passage 26 through a supply/discharge passage 28.

To the main passage 26, on a side closer to the front wheel side master cylinder 24F than a merged connection part with the supply/discharge passage 28, the normally-open first electromagnetic open/close valve V1 which allows the communication between the front-wheel-side master cylinder 24F and the front-wheel-side brake caliper 16 or interrupts such communication is interposed. Further, a branch passage 30 is connected to the main passage 26, and a liquid loss simulator 32 is connected to the branch passage 30 through a normally-closed second electromagnetic open/close valve V2.

Further, a bypass passage 34 which bypasses the second electromagnetic open/close valve V2 is provided to the branch passage 30, and a check valve 36 which allows the flow of an operating liquid in the direction toward the master cylinder 24 from a liquid loss simulator 32 side is provided to the bypass passage 34.

The liquid loss simulator 32 has a function of applying a pseudo liquid pressure reaction force corresponding to a manipulated variable of the brake lever 12 to the master cylinder 24 when the first electromagnetic open/close valve V1 closes the main passage 26 (at the time of operating the brake-by-wire). The second electromagnetic open/close valve V2 opens the branch passage 30 when the reaction force is imparted by the liquid loss simulator 32 thus allowing the master cylinder 24 side and the liquid loss simulator 32 to communicate with each other.

The liquid loss simulator 32 includes a cylinder 32a, a piston 32b which is housed in the cylinder 32a in a reciprocating manner, a liquid chamber 32c which is formed between the cylinder 32a and a distal end surface of the piston 32b and receives an operating liquid (brake liquid) flown from a master cylinder 24 side, and a repulsive spring 32d which is arranged on a side of the piston 32b opposite to the liquid chamber 32c. The repulsive spring 32d is constituted by arranging a coil spring and a resin spring having different characteristics in series, for example. Due to such a constitution, the repulsive spring 32d imparts a reaction force of a characteristic which rises gently in an initial stage of an operation and rises sharply at a stroke end to a brake operating element (brake lever 12) by way of the piston 32b.

The front-wheel-side hydraulic modulator 22F includes a ball screw mechanism 40 which pushes a piston 22b provided in the inside of a cylinder 22a in the direction toward a liquid pressure chamber 22c formed between the cylinder 22a and the piston 22b, a return spring 42 which always pushes the piston 22b to a ball screw mechanism 40 side, and an electrically-operated motor 44 which operates the ball screw mechanism 40. The liquid pressure chamber 22c is communicably connected to the supply-discharge passage 28.

The front-wheel-side hydraulic modulator 22F increases or decreases a pressure in the liquid pressure chamber 22c by pushing the piston 22b with reference to an initial position of the cylinder 22a by the electrically-operated motor 44 by way of the ball screw mechanism 40 or by returning the piston 22b by the return spring 42 thus increasing or decreasing a braking pressure of the brake caliper 4. The piston 22b is configured to be returned to the initial position when the electrically-operated motor 44 is brought into a non-energized state.

The electrically-operated motor 44 accurately and simply electrically adjusts a position of the piston 22b determined based on a rotational position of the ball screw mechanism 40 by adjusting a current value determined based on an input duty ratio (ON time/ON time + OFF time) by a PWM control thus adjusting a pressure in the liquid pressure chamber 22c.

Accordingly, the electrically-operated motor 44 can perform a combined brake system control which positively supplies an operating liquid to the main passage 26 (brake caliper 16) and an ABS control which reduces, maintains or re-increases a pressure in the liquid pressure chamber 22c by advancing or retracting the piston 22b.

A normally-closed third electromagnetic open/close valve V3 is interposed in the supply/discharge passage 28. Further, a bypass passage 48 is provided to the supply/discharge passage 28 by bypassing the third electromagnetic open/close valve V3. A check valve 50 which allows the flow of an operating liquid in the direction toward the brake caliper 16 from the front-wheel-side hydraulic modulator 22F side is provided to the bypass passage 48.

On an input side which is a master cylinder 24 side with the first electromagnetic open/close valve V1 sandwiched between the master cylinder 24 side and the brake caliper 16 side, a first pressure sensor (P) 52a is provided on a side closer to the front-wheel-side master cylinder 24F than the second electromagnetic open/close valve V2, and a second pressure sensor (P) 52b is provided on a side closer to the liquid loss simulator 32 than the second electromagnetic open/close value V2. Further, a third pressure sensor (p) 54 is provided on an output side which is the brake caliper 16 side. A front-wheel-side wheel speed sensor 56F and a rear-wheel-side wheel speed sensor 56R which detect wheel speeds are mounted on the brake caliper 16.

Further, a mode change over switch 58 which allows a rider to change over a control mode by a manual operation is provided, and the rider selects a combined brake system control by changing over the switch 58 when the rider desires the combined brake system control. The explanation made hereinafter relates to a case where the combined brake system control is selected.

The controller 20 is a control part which receives the power supply from a battery 60, and performs an open/close control of the first electromagnetic open/close valve V1, the second electromagnetic open/close valve V2 and the third electromagnetic open/close valve V3 based on respective detection signals of the first pressure sensor 52a, the second pressure sensor 52b and the third pressure sensor 54, respective detection signals of the front-wheel-side wheel speed sensor 56F and the rear-wheel-side wheel speed sensor 56R and the like, and also operates the front-wheel-side hydraulic modulator 22F and the rear-wheel-side hydraulic modulator 22R by drivably controlling the electrically operated motor 44 (signal lines being indicated by a broken line in Fig. 1).

Next, the manner of operation of the combined brake system and the ABS in the front wheel brake and the rear wheel brake is explained.

When a vehicle is stopped (vehicle speed = 0), as shown in Fig. 1, in the front wheel side brake circuit 10F and the rear wheel side brake circuit 10R, the first electromagnetic open/close valve V1 assumes an open state, the second electromagnetic open/close valve V2 assumes a closed state, and the third electromagnetic open/close valve V3 assumes a closed state.

When the vehicle is at a predetermined speed or more, the second electromagnetic open/close valve V2 is opened. When a rider operates only the brake lever 12 singly, for example, speeds of the front and rear wheels at this point of time are inputted to the controller 20 from the front-wheel-side wheel speed sensor 56F and the rear-wheel-side wheel speed sensor 56R, and information on a brake manipulated variable or the like is inputted to the controller 20 through the first pressure sensor 52a and the second pressure sensor 52b. At this point of time, in response to a command from the controller 20, in both brake circuits 10F and 10R, the first electromagnetic open/close valve V1 is operated in the direction that the main passage 26 is closed and, simultaneously, the third electromagnetic open/close valve V3 is operated in the opening direction so that the front-wheel-side hydraulic modulator 22F and the rear-wheel-side hydraulic modulator 22R supply a liquid pressure corresponding to an operating condition of a vehicle or a brake operation of the vehicle to the respective brake calipers 16, 18.

That is, in the front-wheel-side brake circuit 10F, firstly, the second electromagnetic open/close valve V2 is opened and, subsequently, the first electromagnetic open/close valve V1 and the third electromagnetic open/close valve V3 are sequentially opened.

Accordingly, the main passage 26 is separated from the front-wheel-side master cylinder 24F due to the closing operation of the first electromagnetic open/close valve V1 and, simultaneously, the master cylinder 24 and the liquid loss simulator 32 are made to communicate with each other through the branch passage 30 and the main passage 26 due to the opening operation of the second electromagnetic open/close valve V2, and, further, the front-wheel-side hydraulic modulator 22F and the brake caliper 16 are made to communicate with each other through the supply/discharge passage 28 and the main passage 26 due to an opening operation of the third electromagnetic open/close valve V3.

Also in the rear-wheel-side brake circuit 10R, firstly, the second electromagnetic open/close valve V2 is opened and, subsequently, the first electromagnetic open/close valve V1 and the third electromagnetic open/close valve V3 are sequentially opened. Accordingly, the main passage 26 is separated from the master cylinder 24 due to the closing operation of the first electromagnetic open/close valve V1 and, simultaneously, the master cylinder 24 and the liquid loss simulator 32 are made to communicate with each other through the branch passage 30 and the main passage 26due to the opening operation of the second electromagnetic open/close valve V2 and, further, the rear-wheel-side hydraulic modulator 22R and the brake caliper 18 are made to communicate with each other through the supply/discharge passage 28 and the main passage 26 due to an opening operation of the third electromagnetic open/close valve V3.

Accordingly, a rider can perceive brake operating feeling which is reproduced in a pseudo manner by the liquid loss simulators 32 of the front-wheel-side and rear-wheel-side brake circuits 10F, 10R on front and rear wheel sides. Simultaneously, the fluctuation of a liquid pressure due to the operation of the front-wheel-side hydraulic modulator 22F and the rear-wheel-side hydraulic modulator 22R is not transmitted to a rider's side since the first electromagnetic open/close valve V1 is closed. At this point of time, the electrically-operated motors 44 of the front-wheel-side hydraulic modulator 22F and the rear-wheel-side hydraulic modulator 22R are operated simultaneously so that the pistons 22b are pushed by the ball screw mechanisms 40 whereby an operating liquid in the liquid pressure chambers 22c is pressurized. Accordingly, liquid pressures corresponding to a control of the electrically operated motors 44 are supplied to the brake calipers 16, 18 through the main passages 26.

Further, out of wheel speeds detected by the front-wheel-side and rear-wheel-side wheel speed sensors 56F, 56R, the controller 20 sets the higher wheel speed as an estimated vehicle speed of a vehicle, and calculates a front wheel slip ratio or a rear wheel slip ratio based on the difference between this estimated vehicle speed and the wheel speed of the front wheel or the rear wheel. Here, when the front wheel slip ratio or the rear wheel slip ration exceeds a preset threshold value of the slip ratio, the controller 20 is configured to determine that a slip occurs in the wheel and starts an operation of an ABS control so as to reduce liquid pressures generated by the front-wheel-side hydraulic modulator 22F and the rear-wheel-side hydraulic modulator 22R.

That is, when a state that the slip ratio of the front wheel or the rear wheel exceeds a predetermined value is detected by the front-wheel-side wheel speed sensor 56F or the rear-wheel-side wheel speed sensor 56R, the controller 20 retracts the piston 22b by controlling the electrically operated motor 44 so that a slip ratio of the wheel is properly controlled by an ABS control by lowering a braking pressure of the brake caliper 16 (combined brake system control + ABS control). Here, the first electromagnetic open/close valve V1 is closed so that the communication between the front-wheel-side master cylinder 24F and the front-wheel-side hydraulic modulator 22F is interrupted whereby there is no possibility that a change in pressure in the ABS control is transmitted to the brake lever 12.

Next, a braking force control of the front wheel brake and the rear wheel brake in a combined brake system control and an ABS control is explained. In the explanation made hereinafter, there is a case where the front wheel is abbreviated as Fr and the rear wheel is abbreviated as Rr.

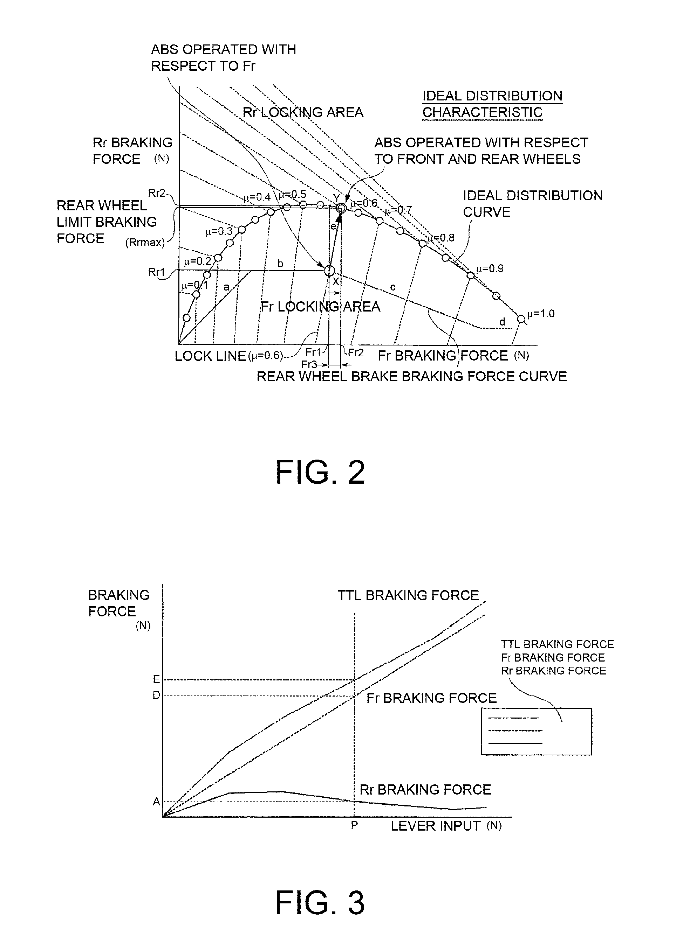

Fig. 2 is a graph showing an ideal distribution curve of a braking force in front and rear wheel brakes, and setting of a braking force of the rear wheel brake at the time of singly inputting the braking force to the front wheel brake using a brake lever in the combined brake system.

The ideal distribution curve is a curve which is formed by connecting plots which indicate braking forces where the front wheel and the rear wheel are simultaneously locked at the time of braking for respective road surfaces having different friction coefficients (µ) and indicates the ideal distribution of braking forces in the front and rear wheel brakes. It is preferable to set the braking forces of the front wheel brake and the rear wheel brake such that the braking force is changed along this ideal distribution curve as much as possible in the combined brake system.

Further, in the drawing, a front and rear wheel brake braking force curve at the time of inputting the braking force using only the brake lever is also shown in the drawing along with the above-mentioned ideal distribution curve. This curve indicates a braking force which is generated by the rear wheel brake in an interlocking manner with the front wheel brake when only the brake lever 12 for the front wheel brake is operated in the combined brake system. To enable the acquisition of braking which clearly reflects the intention of a rider by the brake lever, the rear wheel brake breaking force curve is set slightly lower (lower braking force) than the ideal distribution curve. That is, the rear wheel brake breaking force curve is set such that the front wheel brake is mainly operated.

The brake caliper pressure on a rear wheel side is changed as follows. When a lever input generated by the brake lever 12 is increased at a fixed rate so that a master cylinder pressure on a front wheel side is gradually increased, the brake caliper pressure on a rear wheel side is initially gradually increased and, thereafter, the brake caliper pressure is saturated, and when a master cylinder pressure on a front wheel side is increased, the brake caliper pressure on the rear wheel side is gradually lowered.

To be more specific, the ideal distribution curve is changed with a relatively steep rightwardly-and-upwardly inclined straight line indicated by a in a low µ passage and, thereafter, is changed in a horizontal highland shape indicated by b in an intermediate µ passage, is changed with a relatively gentle rightwardly-and-downwardly inclined straight line indicated by c in a high µ passage, and a low braking force is maintained in a horizontal shape again indicated by d in a high µ passage where µ exceeds 0.9.

In the present invention, when an ABS is operated with respect to the front-wheel brake in a state where a rear wheel brake is operated by the combined brake system, a rear wheel increase control which increases a braking force of the rear wheel brake is performed. In this rear wheel increase control, the braking force is increased from a point X to a point Y as shown in Fig. 2. That is, for example, in a state where the combined brake system is operated while a vehicle travels on a road surface having µ of 0.6, when the ABS is operated at a point X, the rear wheel brake is subjected to a rear wheel increase control such that a braking force is elevated from the point X to a limit point Y of an ideal distribution curve along a lock line having µ of 0.6 as indicated by a straight line e having a steep angle. This rear wheel increase control is explained in detail later.

Assuming a brake force of the front wheel brake at the point X (µ = 0.6) as Fr1 and a brake force of the rear wheel brake at the point X (µ = 0.6) as Rr1, the braking force of the rear wheel brake is not locked even when a braking force of the rear wheel brake is increased to a braking force Rr2 corresponding to Fr1 of the ideal distribution curve.

When the ABS is operated with respect to the front wheel brake, the rear-wheel-side hydraulic modulator 22R is driven toward a rear wheel limit braking force Rrmax. When a braking force of the rear wheel brake is increased, since the lock line is inclined rightwardly and upwardly, a lock point of the front wheel brake (X in this state) is shifted to a right side. Assuming a braking force of the front wheel brake when the braking force of the rear wheel brake assumes a rear wheel limit braking force Rrmax as Fr2, the lock point of the front wheel brake can be increased by Fr3 (= Fr2 - Fr1) and hence, the deceleration of the front wheel and thereby the deceleration of the vehicle as a whole can be increased.

Fig. 3 is a graph showing a change in a lever input and a braking force when an ABS operation is not operated at the time of performing a combined brake system control, wherein the lever input is taken on an axis of abscissas and a braking force is taken on an axis of ordinates. Respective braking forces of the front wheel brake and the rear wheel brake are changed corresponding to the lever input, wherein the braking force of the front wheel brake (Fr braking force) changes linearly in the rightward and upward direction proportional to the lever input.

To the contrary, a braking force of the interlocking rear wheel brake (Rr braking force) changes as a polygonal line in the same manner as the rear wheel brake braking curve shown in Fig. 2.

As a result, a total braking force (TTL braking force) which is a sum of the braking force of the front wheel brake and the braking force of the rear wheel brake is expressed by a polygonal line which approximately follows the Fr braking force line. When a lever input is P, the braking force of the rear wheel brake becomes A, the braking force of the front wheel brake becomes D, and the total braking force becomes E.

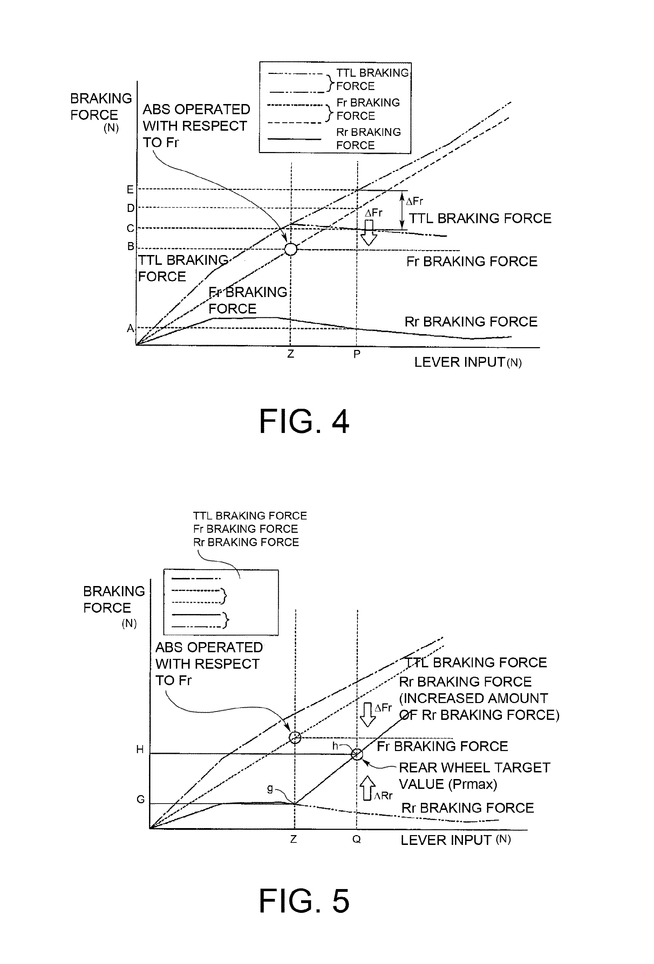

Fig. 4 shows a state where the ABS is operated in the graph shown in Fig. 3. When the ABS is operated with respect to the front wheel brake at lever input Z, the braking force B of the front wheel is not increased even when the lever input is increased thereafter. As a result, provided that the braking force corresponding to the lever input P when the ABS is not operated is D, the braking force of the front wheel is lowered by an amount of ΔFr (D - B) due to the ABS control. At this point of time, B corresponds to an output pressure of the front wheel brake obtained corresponding to the lever input P, and D corresponds to an input pressure of the front wheel brake. Accordingly, it is possible to express the ΔFr also as the difference between the input pressure and the output pressure in the front wheel brake corresponding to the lever input P.

The total braking force TTL is lowered by an amount corresponding to this lowering ΔFr, that is, the lowering of a braking force E to a braking force C at the time of performing a non-ABS control. Accordingly, even when locking is released by the ABS, the deceleration of a vehicle is lowered by a corresponding amount thus influencing braking feeling.

In view of the above, to prevent lowering of the total braking force, it is necessary to compensate for the ΔFr amount which is a lowering corresponding amount with a braking force of the rear wheel brake.

Fig. 5 is a graph showing a first embodiment relating to a rear wheel braking force increase control to compensate for lowering of such a total braking force. Hereinafter, the rear wheel braking force increase control in the first embodiment is explained.

Fig. 5 shows the rear wheel braking force increase control where the braking force of the rear wheel brake is increased toward a lock limit of the rear wheel from the lever input Z at which the ABS of the front wheel is operated in Fig. 4.

Due to this rear wheel braking force increase control, at the lever input Z at which the ABS of the front wheel brake is operated, the braking force of the rear wheel brake rises at a steep angle from a point g, and the braking force intersects with a perpendicular of a predetermined lever input Q at a point h. Accordingly, assuming the respective braking forces of the rear wheel brake at the point g and the point h as G and H respectively, an amount of increase of the braking force of the rear wheel brake becomes ΔRr (= H - G).

Accordingly, by setting ΔRr equal to or larger than ΔFr, the total braking force can be increased to a value substantially equal to or more than a value at the time of performing the non-ABS operation so that large deceleration can be realized. Further, the braking force can be increased to a limit at which the rear wheel is locked.

Here, assume a target value to which the braking force of the rear wheel is increased as a rear wheel limit target pressure Prmax, and a value corresponding to ΔFr as a rear wheel target pressure Prr1. Although the rear wheel braking force increase control aims at the increase of the braking force of the rear wheel, to be more specific, the control is performed by increasing a caliper pressure of the rear wheel brake and hence, the target value is expressed as a pressure value. In an actual operation, a caliper pressure which corresponds to a rear wheel limit braking force Rrmax becomes the rear wheel limit target pressure Prmax.

To compensate for lowering of the total braking force, it is sufficient to increase the braking force of the rear wheel toward the rear wheel target pressure Prr1 which corresponds to a lowered amount. However, by adopting the rear wheel limit target pressure Prmax as the target value, there is a possibility that the larger total braking force can be realized and hence, in the first embodiment, the rear wheel limit target pressure Prmax is adopted as a target value.

This rear wheel limit target pressure Prmax can be easily obtained from the rear wheel limit braking force (Rrmax) shown in Fig. 2. That is, when µ is determined by calculating a slip ratio, a lock limit value of the rear wheel is an intersecting point between the lock line corresponding to this µ and the ideal distribution curve. For example, when µ is 0.6, the lock limit value of the rear wheel becomes Y which is an intersecting point between the lock line and the ideal distribution curve with µ set to 0.6 and hence, the rear wheel braking force at Y becomes a rear wheel limit braking force (Rrmax) which is a lock limit value of the rear wheel, and a braking pressure of the brake caliper 18 which imparts such a braking force becomes a rear wheel limit target pressure Prmax.

In determining the rear wheel limit target pressure Prmax, the method which is performed based on µ has been explained. However, the rear wheel limit target pressure Prmax can be also determined based on a braking pressure of the front wheel brake in place of µ. That is, a caliper pressure in the brake caliper 16 of the front wheel brake has the correlation with a braking force and hence, a braking force of the front wheel brake can be determined by detecting this caliper pressure by the third pressure sensor 54. Here, by obtaining a point corresponding to the braking force of the front wheel brake based on the ideal distribution curve shown in Fig. 2, the braking force of the front wheel at this point becomes the rear wheel limit target pressure Prmax.

Although the control is performed toward the rear wheel limit target pressure Prmax in this embodiment, a rear wheel braking force may be set based on a value of a front wheel braking force at the time of ABS operation based on an ideal distribution curve (a value corresponding to Rr2 which corresponds to Fr1 in Fig. 2), and a control may be performed toward this value (Rr2).

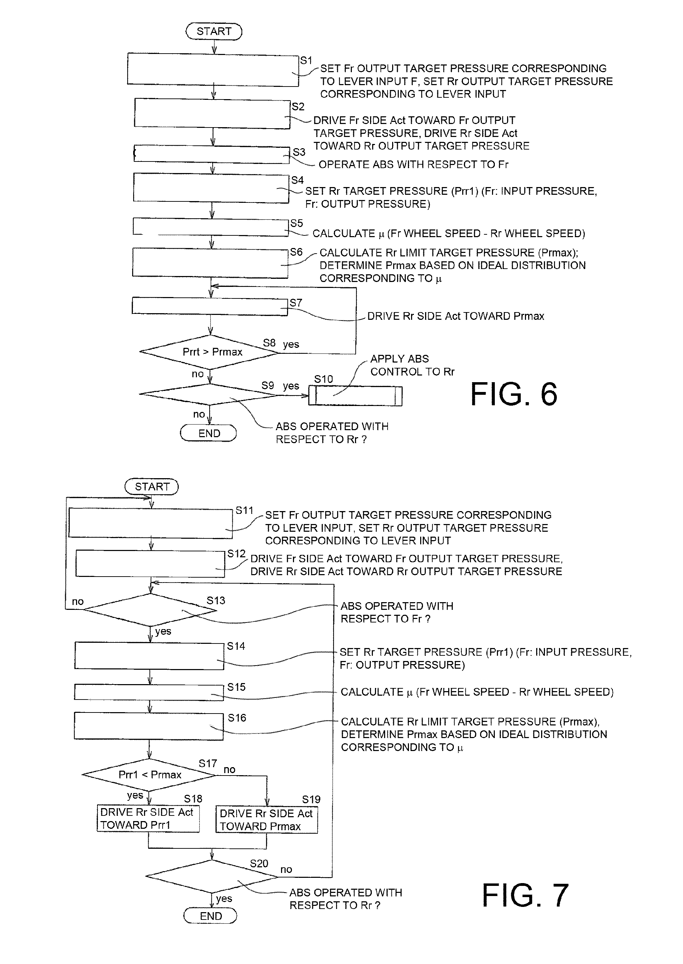

Next, a rear wheel braking force increase control method according to the first embodiment is explained based on a flowchart shown in Fig. 6. The flowchart shown in Fig. 6 describes the rear wheel braking force increase control method at the time of performing brake lever single inputting in the combined brake system.

Firstly, in step S1, to operate the combined brake system, corresponding to a lever input (assuming the lever input as F) which is a pressure in the front-wheel-side master cylinder 24 detected by the pressure sensor 52, an output target pressure of the front wheel brake and an output target pressure of the rear wheel brake are set.

Although the pressure of the master cylinder 24 on the front wheel side (lever input) is used as the reference in this manner for accurately reflecting a rider's intention of braking, eventually, a liquid pressure applied to the master cylinder 24 becomes substantially equal to a braking pressure of the brake caliper 16 on a front wheel side.

In step S2, the front-wheel-side hydraulic modulator 22F (Fr side Act) and the rear-wheel-side hydraulic modulator 22R (Rr side Act) are respectively driven based on the respective output target pressures set in step S 1.

Next, a braking force of the front wheel brake is increased and reaches an ABS operation condition, an ABS control is applied to the front wheel brake in accordance with processing in step S3.

Due to this ABS control, the total braking force is lowered and hence, this lowered amount ΔFr is set in the rear wheel target pressure Prr1 as a target value for increasing the braking force of the rear wheel brake. The rear wheel target pressure Prr1 can be also obtained as the difference between the input pressure and the output pressure in the front wheel brake corresponding to the lever input F (step S4). The rear wheel target pressure Prr1 may be obtained by selection using a preset predetermined map, by an arithmetic operation using functions, or by the multiplication of suitable coefficients based on a value of the difference between the input pressure and the output pressure.

Further, as described previously, µ is calculated based on the difference between the front and rear wheel speeds (front wheel speed - rear wheel speed) in a preset manner (step S5). As described previously, a braking pressure of the front wheel brake can be used in place of µ.

Next, a rear wheel limit target pressure Prmax which corresponds to a rear wheel limit braking force (Rrmax) is set based on the determined µ and the ideal distribution curve shown in Fig. 2 (step S6). That is, the braking force of the rear wheel brake (Rrmax) at an intersecting point between a lock line of the predetermined µ and the ideal distribution curve becomes the rear wheel limit target pressure Prmax.

The rear wheel limit target pressure Prmax may be obtained by calculation, may be obtained by selecting suitable values from a predetermined map, or may be obtained by calculation using an arithmetic operation or the like. When the rear wheel limit target pressure Prmax is determined, the rear-wheel-side hydraulic modulator 22R (Rr side Act) is driven so that a braking force of the rear wheel brake is increased toward the rear wheel limit target pressure Prmax (step S7).

Subsequently, the rear wheel limit target pressure Prmax and the rear wheel target pressure Prr1 are compared to each other (step S8). When the determination is affirmative (rear wheel limit target pressure Prmax < rear wheel target pressure Prr1), the braking force of the rear wheel brake has not yet reached the rear wheel limit target pressure Prmax and there is a room for the increase of the braking force of the rear wheel brake and hence, the processing returns to step S7, and the Rr side actuator (Act) is driven so that the braking force is successfully increased toward the rear wheel limit target pressure Prmax.

When the determination is negative (rear wheel limit target pressure Prmax ≥ rear wheel target pressure Prr1) in step S8, since the braking force has already reached the rear wheel limit target pressure Prmax, it is determined whether or not the ABS on a rear wheel brake side is operated (step S9). If the determination is negative, the ABS control of the rear wheel brake is applied so that locking of the rear wheel is prevented (step S10). When the determination is affirmative, the processing is immediately finished.

In these step S7 and step S8, when the Rr side actuator is driven so as to increase the braking force toward the rear wheel limit target pressure Prmax, as shown in Fig. 5, with the predetermined lever input F generated after the ABS of the front wheel brake is operated, the braking force of the rear wheel brake is increased by an amount of ΔRr (= H - G) so that the lowered amount ΔFr can be recovered.

Due to such an operation, when the brake lever 12 is singly operated using the combined brake system, braking which mainly uses the front wheel brake is performed and hence, the deceleration feeling which conforms to the intention of a rider can be obtained.

Further, when the ABS is operated with respect to the front wheel brake in such a combined brake system operation state, the rear wheel side hydraulic modulator 22R is driven in the direction that a caliper pressure of the rear wheel brake which is a braking pressure of the rear wheel braking means is increased and hence, by increasing a braking force on a rear wheel side, a ground load allotted amount on a rear wheel side can be increased thus enhancing the deceleration of a vehicle body.

Further, by increasing a braking pressure of the rear wheel brake, a braking pressure point at which the ABS of the front wheel is operated is shifted in the elevating direction and hence, the higher deceleration can be obtained.

Further, the braking force of the rear wheel brake at the time of operating the combined brake system and the ABS of the front wheel brake is controlled such that the braking force is increased toward the rear wheel limit target pressure which corresponds to the braking force by which the rear wheel is locked and hence, a relatively large braking force is imparted to the brake caliper 18 which is the rear wheel control means at the time of ABS operation whereby the deceleration of the vehicle as a whole can be enhanced.

Further, in the braking force control of the rear wheel brake at the time of operating the combined brake system and the ABS of the front wheel brake, the braking pressure of the rear wheel brake is set corresponding to inputting by the front wheel brake lever 12 and hence, the deceleration close to operating feeling of a rider can be obtained with respect to the whole vehicle.

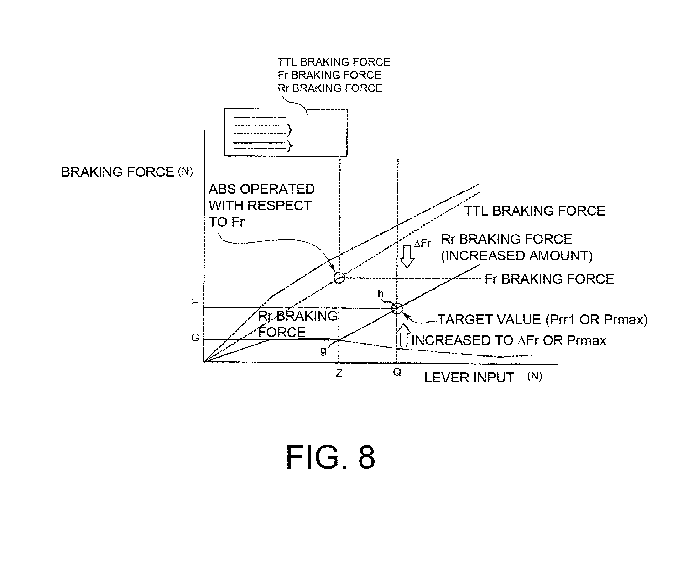

Next, a second embodiment is explained in conjunction with Fig. 7 and Fig. 8. This embodiment is characterized in that only setting relating to an increased amount of a rear wheel braking force in a rear wheel braking force increase control is changed, and other constitutions are substantially equal to the corresponding constitutions of the first embodiment and hence, the identical parts are indicated using the same symbols and the explanation of parts which are identical with the parts of the first embodiment is omitted.

Fig. 7 is a flowchart corresponding to Fig. 6. Steps S11 to S16 are substantially equal to steps S 1 to S6 of the first embodiment and hence, the explanation of these steps is omitted except for step S13. Step S13 is directed to determination processing different from processing in step S6, wherein when the determination is affirmative (an ABS control is applied to a front wheel brake), the processing advances to step S14. When the determination is negative (no), in accordance with step S11 and step S12, a front-wheel-side hydraulic modulator 22F (Fr side Act) and a rear-wheel-side hydraulic modulator 22R (Rr side Act) are controlled.

This embodiment is characterized by a control method executed after step S17. That is, when a rear wheel limit target pressure Prmax and a rear wheel target pressure Prr1 are determined, in step S17, a comparison is made for determining whether or not the rear wheel limit target pressure Prmax is larger than the rear wheel target pressure Prr1 (rear wheel limit target pressure Prmax > rear wheel target pressure Prr1). When the determination is affirmative (rear wheel limit target pressure Prmax > rear wheel target pressure Prr1), the rear-wheel-side hydraulic modulator 22R (Rr side Act) is driven so that a braking force of the rear wheel brake is increased toward the rear wheel target pressure Prr1 (step S18) and, thereafter, the processing advances to step S20.

When the determination in step S17 is negative (rear wheel target pressure Prr1 ≥ rear wheel limit target pressure Prmax), the rear-wheel-side hydraulic modulator 22R (Rr side Act) is driven so that a rear-wheel-side caliper pressure is increased toward the rear wheel limit target pressure Prmax so as to increase a braking force of the rear wheel brake (step S19) and, thereafter, the processing advances to step S20.

In step S20, it is determined whether or not a rear wheel ABS (RrABS) is operated, and when the determination is negative, a braking force of the rear wheel brake has not yet reached a rear wheel limit braking force and hence, the processing returns to step S13 and the above-mentioned steps are repeated. When the determination in S20 is affirmative, the braking force of the rear wheel brake has already reached the rear wheel limit braking force and hence, the processing is immediately finished.

Fig. 8 is a graph showing a change in braking force of the rear wheel brake by such a control, and in the same manner as the above-mentioned embodiment, a braking force of the front wheel brake is set to a fixed value from a lever input Z due to a front wheel ABS control, and the braking force is lowered by ΔFr in response to a lever input Q.

On the other hand, with respect to the rear wheel brake, in step S18, when the rear wheel target pressure Prr1 is smaller than the rear wheel limit target pressure Prmax (Prr1 < Prmax), the braking force is increased toward the rear wheel target pressure Prr1 so that the braking force is increased by ΔFr which corresponds to a lowered amount of braking force of the front wheel brake. Accordingly, the total braking force becomes equal to the total braking force at the time of performing a non-ABS control of the front wheel brake. Accordingly, a straight line indicative of a change in braking force of the front wheel brake between a point g and a point h becomes parallel to a straight line indicative of a change in braking force of the front wheel brake at the time of performing a non-ABS control.

To the contrary, as shown in step S19, when the rear wheel target pressure Prr1 is equal to or larger than the rear wheel limit target pressure Prmax, the braking force of the rear wheel is increased toward the rear wheel limit target pressure Prmax thus preventing locking of the rear wheel.

In this manner, by comparing the rear wheel limit target pressure Prmax and the rear wheel target pressure Prr1 and by changing a control target value based on the difference between these pressures, it is possible to realize a braking operation which is faithful to an intention of a rider as much as possible while preventing locking of the rear wheel.

That is, in an actual circumstance of the brake system, a rider does not desire the considerably large deceleration when ΔFr is relatively small (Prr1 < Prmax). Accordingly, in such a case, the increase of the braking force of the rear wheel brake is set to a value which conforms to a lowered amount of braking force of the front wheel brake and hence, a rider can acquire control operation feeling which conforms to the braking intension of the rider by preventing discomfort brought about by the excessive braking of the rear wheel brake while preventing the lowering of the deceleration.

On the other hand, when the rear wheel target pressure Prr1 is equal to or larger than the rear wheel limit target pressure Prmax such as sudden braking, the braking force of the rear wheel brake is controlled toward the rear wheel limit target pressure which is a limit at which the rear wheel brake is locked and hence, the higher deceleration can be obtained.

### Main reference numerals:

- 10:: brake device,
- 12:: brake lever (brake operating element),
- 14:: brake pedal (brake operating element),
- 16:: front-wheel-side brake caliper,
- 18:: rear-wheel-side brake caliper,
- 20:: controller,
- 22:: hydraulic modulator (actuator)

## Claims

1. A brake system comprising: a front wheel brake operating element (12); an actuator (22) which imparts a braking force to a front wheel brake (16) and a rear wheel brake (18) by applying a liquid pressure to the front wheel brake (16) and the rear wheel brake (18) corresponding to a manipulated variable of the front wheel brake operating element (12), and is capable of increasing or decreasing the liquid pressure at the time of performing an ABS operation; and a controller (20) which controls the actuator (22), wherein
the controller (20), at the time of performing normal braking where an ABS of the front wheel brake is not operated, sets a braking force distributed to the rear wheel brake when the front wheel brake operating element (12) is operated to a low value with respect to ideal distribution of braking forces to front and rear wheels, and
the controller (20), when the ABS is operated with respect to the front wheel brake, increases a braking force of the rear wheel brake by driving the actuator (22) in the direction that the liquid pressure is increased;
the system being **characterized in that**
when the ABS is operated with respect to the front wheel brake (16),
the controller (20) drives the actuator toward a rear wheel limit target pressure (Prmax) set by the controller (20) such that the braking force of the rear wheel brake (18) is elevated to a limit value lying on a predetermined ideal distribution curve of braking forces to the front and rear wheels

2. The brake system according to claim 1, wherein
when the ABS is operated with respect to the front wheel brake,
the controller (20) sets a rear wheel target pressure (Prr1) in response to inputting by the front wheel brake operating element (12), and
the controller (20) drives the actuator (22) toward the rear wheel target pressure (Prr1).

3. The brake system according to claim 2 , wherein
when the ABS is operated with respect to the front wheel brake,
the controller (20) sets a rear wheel limit target pressure (Prmax) using a braking pressure or a slip ratio of the front wheel brake based on the ideal distribution of the braking forces of the front and rear wheels,
the controller (20) compares the rear wheel target pressure (Prr1) and the rear wheel limit target pressure (Prmax),
the controller (20) drives the actuator toward the rear wheel target pressure (Prr1) when the rear wheel target pressure (Prr1) is lower than the rear wheel limit target pressure (Prmax), and
the controller (20) drives the actuator toward the rear wheel limit target pressure (Prmax) when the rear wheel target pressure (Prr1) is higher than the rear wheel limit target pressure (Prmax).

## Patentansprüche

1. Bremssystem, umfassend: ein Vorderradbremsenbetätigungselement (12); einen Aktuator (22), der eine Bremskraft an eine Vorderradbremse (16) und an eine Hinterradbremse (18) übermittelt, indem er entsprechend einer Stellgröße des Vorderradbremsenbetätigungselements (12) einen Flüssigkeitsdruck auf die Vorderradbremse (16) und auf die Hinterradbremse (18) aufbringt, und dazu geeignet ist, den Flüssigkeitsdruck zu der Zeit des Ausführens eines ABS-Betriebs zu erhöhen oder zu verringern; und ein Regel-/Steuergerät (20), das den Aktuator (22) regelt/steuert, wobei das Regel-/Steuergerät (20) zu der Zeit des Ausführens normalen Bremsens, wo ein ABS der Vorderradbremse nicht arbeitet, eine Bremskraft festsetzt, die sich auf die Hinterradbremse verteilt, wenn das Vorderradbremsenbetätigungselement (12) mit einem niedrigen Wert bezüglich einer Idealverteilung von Bremskräften auf Vorder- und Hinterräder betätigt wird, und wobei
das Regel-/Steuergerät (20), wenn das ABS bezüglich der Vorderradbremse arbeitet, eine Bremskraft der Hinterradbremse erhöht, indem es den Aktuator (22) dahingehend lenkt, dass der Flüssigkeitsdruck erhöht wird;
wobei das System **dadurch gekennzeichnet ist, dass**,
wenn das ABS bezüglich der Vorderradbremse (16) arbeitet,
das Regel-/Steuergerät (20) den Aktuator hin zu einem Grenzzieldruck (Prmax) des Hinterrades lenkt, der von dem Regel-/Steuergerät (20) so festgesetzt wird, dass die Bremskraft des Hinterrades (18) zu einem Grenzwert gehoben wird, der auf einer vorgegebenen Idealverteilungskurve von Bremskräften auf die Vorder- und Hinterräder liegt.

2. Bremssystem nach Anspruch 1, wobei,
wenn das ABS bezüglich der Vorderradbremse arbeitet,
das Regel-/Steuergerät (20) einen Zieldruck (Prr1) des Hinterrades in Reaktion auf eine Eingabe durch das Vorderradbremsenbetätigungselement (12) festsetzt, und wobei das Regel-/Steuergerät (20) den Aktuator (22) hin zu dem Zieldruck (Prr1) des Hinterrades lenkt.

3. Bremssystem nach Anspruch 2, wobei,
wenn das ABS bezüglich der Vorderradbremse arbeitet,
das Regel-/Steuergerät (20) einen Grenzzieldruck (Prmax) des Hinterrades festsetzt, indem es eine Bremskraft oder ein Schlupfverhältnis der Vorderradbremse anwendet, auf Basis der Idealverteilung der Bremskräfte auf die Vorder- und Hinterräder, wobei das Regel-/Steuergerät (20) den Zieldruck (Prr1) des Hinterrades und den Grenzzieldruck (Prmax) des Hinterrades vergleicht, wobei das Regel-/Steuergerät (20) den Aktuator hin zu dem Zieldruck (Prr1) des Hinterrades lenkt, wenn der Zieldruck (Prr1) des Hinterrades niedriger als der Grenzzieldruck (Prmax) des Hinterrades ist, und wobei das Regel-/Steuergerät (20) den Aktuator hin zu dem Grenzzieldruck (Prmax) des Hinterrades lenkt, wenn der Zieldruck (Prr1) des Hinterrades höher als der Grenzzieldruck (Prmax) des Hinterrades ist.

## Revendications

1. Système de frein comprenant : un élément de commande de frein de roue avant (12) ; un actionneur (22) qui transmet un effort de freinage à un frein de roue avant (16) et à un frein de roue arrière (18) en appliquant au frein de roue avant (16) et au frein de roue arrière (18) une pression de liquide correspondant à une variable manipulée de l'élément de commande de frein de roue avant (12), et qui peut augmenter ou diminuer la pression de liquide au moment d'exécuter une opération d'ABS ; et un contrôleur (20) qui commande l'actionneur (22),
dans lequel le contrôleur (20), au moment d'un freinage normal sans fonctionnement d'un ABS du frein de roue avant, règle un effort de freinage distribué au frein de roue arrière quand l'élément de commande de frein de roue avant (12) est actionné à bas niveau en vue d'une distribution idéale des efforts de freinage entre les roues avant et arrière, et
le contrôleur (20) augmente un effort de freinage du frein de roue arrière, quand l'ABS est activé pour le frein de roue avant, en déplaçant l'actionneur (22) dans la direction qui augmente la pression du liquide ;
le système étant **caractérisé en ce que** lorsque l'ABS est activé pour le frein de roue avant (16), le contrôleur (20) déplace l'actuateur vers une pression de consigne limite pour la roue arrière (Prmax) réglée par le contrôleur (20) de telle sorte que l'effort de freinage du frein de roue arrière (18) soit augmenté jusqu'à une valeur limite qui se situe sur une courbe de distribution idéale prédéterminée des efforts de freinage pour les roues avant et arrière.

2. Système de frein selon la revendication 1, dans lequel, lorsque l'ABS est activé pour le frein de roue avant, le contrôleur (20) règle une pression de consigne pour la roue arrière (Prr1) en réponse à l'entrée par l'élément de commande de frein de roue avant (12), et
le contrôleur (20) déplace l'actionneur (22) vers la pression de consigne pour la roue arrière (Prr1).

3. Système de frein selon la revendication 2, dans lequel, lorsque l'ABS est activé pour le frein de roue avant,
le contrôleur (20) règle une pression de consigne limite pour la roue arrière (Prmax) à l'aide d'une pression de freinage ou d'un rapport de patinage du frein de roue avant sur la base de la distribution idéale des efforts de freinage des roues avant et arrière,
le contrôleur (20) compare la pression de consigne pour la roue arrière (Prr1) et la pression de consigne limite pour la roue arrière (Prmax),
le contrôleur (20) déplace le vérin vers la pression de consigne pour la roue arrière (Prr1) quand la pression de consigne pour la roue arrière (Prr1) est inférieure à la pression de consigne limite pour la roue arrière (Prmax), et le contrôleur (20) déplace le vérin vers la pression de consigne limite pour la roue arrière (Prmax) quand la pression de consigne pour la roue arrière (Prr1) est supérieure à la pression de consigne limite pour la roue arrière (Prmax).
